# EUROPEAN PATENT SPECIFICATION

(11) **EP 1 563 175 B1**
(45) Date of publication and mention of the grant of the patent: **16.12.2009**
(21) Application number: 03759127.8
(22) Date of filing: 21.10.2003
(51) Int. Cl.: F02D 13/02, F01L 1/20

(54) **APPARATUS FOR AN INTERNAL COMBUSTION ENGINE**
VORRICHTUNG FÜR EINEN VERBRENNUNGSMOTOR
APPAREIL POUR UN MOTEUR À COMBUSTION INTERNE

(30) Priority: 08.11.2002 SE 0203316
(43) Date of publication of application: 17.08.2005
(73) Proprietor: VOLVO LASTVAGNAR AB, 405 08 Göteborg (SE)
(72) Inventor: PERSSON, Per, S-433 41 Partille (SE); ARNELL, Jan, S-439 94 Onsala (SE); REMMELGAS, Johan, S-423 54 Torslanda (SE)
(74) Representative: Fröhling, Werner Otto
(86) International application number: PCT/SE2003/001630
(87) International publication number: WO 2004/042215

(56) References cited:
- DE-A1- 4 331 898
- US-A- 5 273 013
- US-A- 5 609 133
- US-A- 6 032 643
- DATABASE WPI Week 198549, Derwent Publications Ltd., London, GB; Class Q52, AN 1985-308995, XP002988413 & SU 1 158 772 A (KOLOMENKA CORR. POLY) 30 May 1985

## Description

### TECHNICAL FIELD:

The present invention relates to an apparatus for an internal combustion engine which for each cylinder with associated piston has at least one inlet valve and at least one exhaust valve for controlling the connection between the combustion chamber in the cylinder and an intake system and an exhaust system respectively, a rotatable camshaft with a cam being designed to interact with a first cam follower and a second cam follower in order to switch between two different operating modes.

### BACKGROUND OF THE INVENTION:

There are numerous examples of the need to be able to adjust the valve lift in inlet or exhaust valves of an internal combustion engine. Such examples include the activation/deactivation of a compression brake system on an internal combustion engine for heavy road vehicles (additional valve movement only operative in engine braking); the generation of valve lift curves of differing width of the Miller-cycle type, for example, for use at different operating points in the engine working range; complete deactivation of the valve movement when isolating certain cylinders at partial load etc., and the institution of internal exhaust gas recirculation via the exhaust valve or via the inlet valve.

When the facility is required for fixing a rocker arm part in relation to another part, for example, an actuator is required that can overcome the forces occurring between the various parts without any impact occurring when the movement of the rocker arm parts in relation to one another approaches the limit positions.

The movement of the rocker arm is controlled by a cam, which defines what movements and accelerations the constituent parts must perform in order to achieve the required lifting movement, and this gives rise to forces and torque in the mechanism. These accelerations must be multiplied by the masses and mass moment of inertia, and any spring forces acting on the mechanism added in order to obtain the total forces in the system.

It is desirable that apparatuses for producing additional openings of valves should not extend significantly in a longitudinal direction in the space available for the engine valve mechanism. For example, the high compression ratios that occur in modern diesel engines mean that the valve mechanism must be designed for very high contact pressures. Furthermore, this type of engine may be fitted with some form of compression brake system, which requires space for actuating members. Consequently no apparatuses for switching between two valve operating modes should encroach on the existing compression brake system. It is also desirable to be able to perform this switch from one mode to another in a simple way.

### SUMMARY OF THE INVENTION:

An object of the invention therefore is to provide an apparatus which permits switching from one valve operating mode to another in an internal combustion engine, within the functional constraints described above. This object is achieved by an apparatus according to the characterizing part of claim 1.

Advantageous examples of embodiments of the invention are set forth in the following subordinate claims.

### BRIEF DESCRIPTION OF THE DRAWINGS

The invention will be described in more detail below, with reference to examples of embodiments shown in the drawings attached, of which
- FIG 1: shows a valve mechanism with the facility for switching between two operating modes according to the invention, and
- Fig 2: shows a schematic diagram of a hydraulic circuit for actuation of the valve mechanism according to Fig. 1.

### DESCRIPTION OF THE PREFERRED EMBODIMENTS:

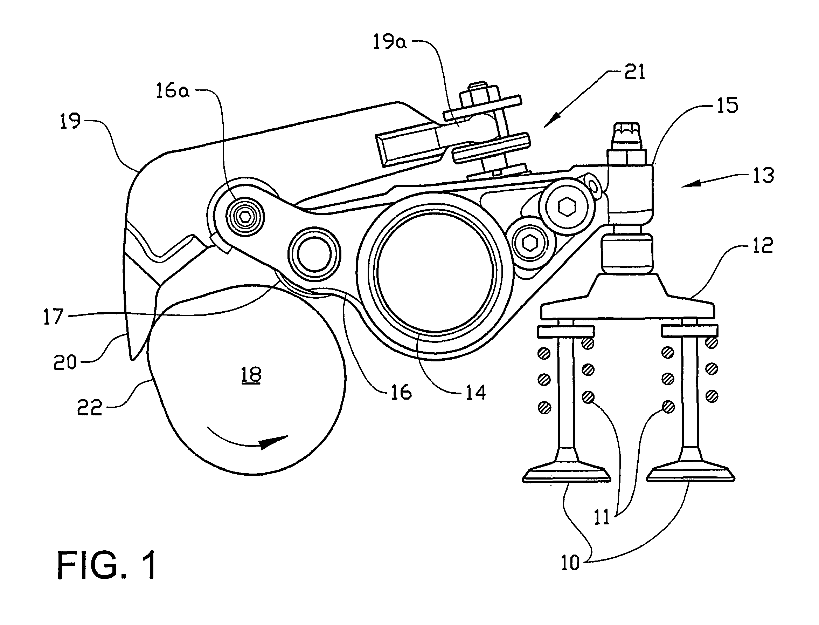

The valve mechanism shown in Fig. 1 is located in a cylinder head and comprises double valves 10 with valve springs 11 and a common yoke 12. The yoke is acted upon by a rocker arm 13, which is pivotally supported on a rocker arm shaft 14. The rocker arm 13 has a valve pressure arm 15 on one side of the shaft 14 and a cam follower arm 16 on the other side, the cam follower arm being provided with a first cam follower in the form of a rocker arm roller 17, which normally interacts with a camshaft 18. The cam follower arm 16 is furthermore provided with a secondary arm 19, which is pivotally supported at the outer end 16a of the arm and is provided with a second cam follower in the form of a finger 20.

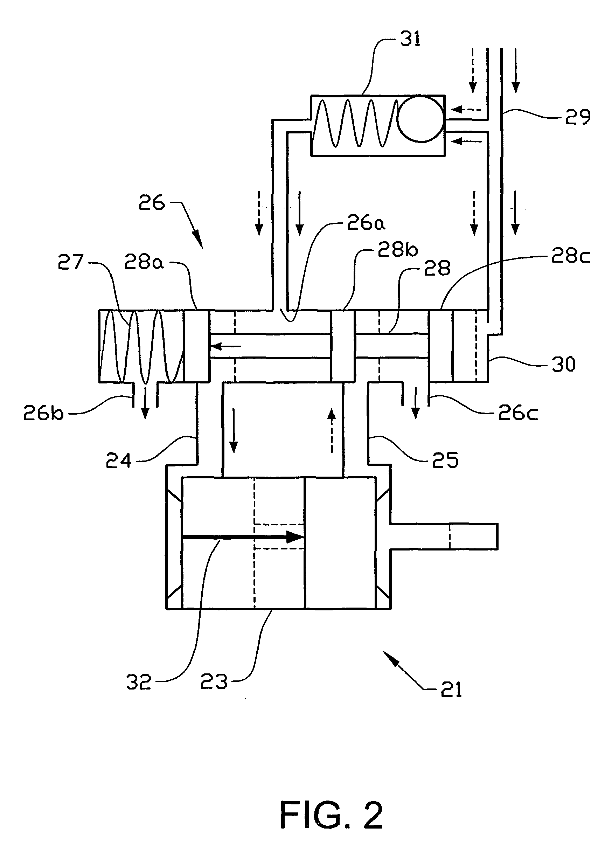

The secondary arm 19 is adjustable between an inoperative position and an operative position by means of a hydraulic piston 21, which is located in the rocker arm and which will be described in more detail below with reference to Fig. 2. The hydraulic piston 21 is coupled, essentially free of play, to the secondary arm 19 by way of a fork 19a.

In the inoperative position (not shown in Fig. 1) the rocker arm 13 is acted upon by the disk cam 22 of the camshaft 18 solely via the rocker arm roller 17. In the operative position (as shown in Fig. 1) the rocker arm 13 is acted upon by the disk cam 22 of the camshaft also via the finger 20. The geometry of the secondary arm 19 is adapted so that in the operative position the rocker arm is actuated by the disk cam 22 at the required phase angle, in this case approximately 80-110 degrees later in the direction of rotation of the camshaft 18.

In order to produce two separate gentle lifting movements by means of one and the same disk cam 22, this may have a first rising ramp for interaction with the pressure roller 17 during the first opening phase of the valve, and a second rising ramp for interaction with the pressure roller 17 and the finger 20 during both opening phases of the valve 10. In addition, the cam may have a first falling ramp and a second falling ramp largely corresponding to the rising ramps.

Control members of the hydraulic piston 21 are shown in Fig. 2, from which it can be seen that the piston cylinder 23 is double-acting with two inlet/outlet ports 24 and 25 respectively, which are connected to a control valve 26. This is fitted with a pilot piston 28, which is loaded towards a limit position (indicated by dashed lines in Fig. 2) by means of a helical coil spring 27 and has three valve cones 28a, 28b and 28c. The control valve 26 is also provided with an inlet port 26a and two outlet ports 26b and 26c. An adjustable pilot pressure (1-4 bar) is supplied via a feed line 29 for hydraulic fluid such as the lubricating oil of the internal combustion engine, which is connected to the control valve 26 on the opposite side 30 to the spring 27. The feed pressure to the piston cylinder 23 is supplied by the line 29 via a spring-loaded non-return valve 31 and the inlet port 26a of the control valve 26.

In the position of use illustrated by solid lines in Fig. 2 a higher pilot pressure has been applied to the control valve 26 via the line 29, in such a way that the control force of the spring 27 has been overcome, with the result that the pilot piston 28 has been shifted to the left in Fig. 2. The piston cone 28a has thereby opened a connection between the port 24 of the piston cylinder and the inlet port 26a of the control valve. Hydraulic fluid can now be fed from the line 29 to the piston cylinder via the non-return valve 31. At the same time the outlet port 26c of the control valve has a connection to the port 25 of the piston cylinder for draining hydraulic fluid from the other side of the piston. If an external force is applied to the hydraulic piston 21 in the opposite direction to the direction of the movement, see the arrow 32 in Fig. 2, this is incapable of moving back since the non-return valve blocks the return flow from the piston cylinder. The force is capable of generating an internal pressure in the piston cylinder, the control valve and the non-return valve that can amount to several hundred bar, without any return movement of the piston 21.

In the position of use illustrated by dashed lines in Fig. 2 a lower pilot pressure has been applied to the control valve 26 via the line 29, the control force of the spring 27 forcing the pilot piston 28 to shift to the_right in Fig. 2. The piston cone 28b thereby opens a connection between the port 25 of the piston cylinder and the control valve inlet port 26a. Hydraulic fluid can now be fed from the line 29 to the right-hand side of the piston in Fig. 2 via the non-return valve 31. At the same time the outlet port 26b of the control valve has a connection to the piston cylinder port 24 for draining hydraulic fluid from the left-hand side of the piston in Fig. 2. The hydraulic piston 21 can now move from right to left in Fig. 2 from the position drawn by a solid line to that drawn by a dashed line. If an external force is applied to the hydraulic piston 21 this is incapable of moving back since the non-return valve blocks the return flow from the piston cylinder. The force may generate an internal pressure in the piston cylinder, the control valve and the non-return valve that can amount to several hundred bar, without any movement of the piston 21.

The method described above for switching from one operating mode to another functions in a valve mechanism, since the accelerations and hence the forces change sign one or more times during a camshaft revolution or, in other words, at the time increment when the force is positive the hydraulic piston follows and oil flows into its chamber, whereas at the time increment when the acceleration is negative the non-return valve blocks the return flow of oil and the oil pressure can reach high levels. In this way therefore it is possible to move two rocker arm parts relative to one another to a mechanically defined stop by means of a small hydraulic piston and a low hydraulic pressure, despite the fact that the forces involved are large forces.

The invention must not be regarded as being restricted to the examples of embodiments described above, a number of further variants and modifications being feasible within the scope of the following patent claims. For example, the second cam follower 20 may be actuated in some other way than via a pivoted arm 19, for example by a translational movement.

## Claims

1. An apparatus for an internal combustion engine which for each cylinder with associated piston has at least one inlet valve and at least one exhaust valve (10) for controlling the connection between the combustion chamber in the cylinder and an intake system and an exhaust system respectively, said apparatus comprising a rotatable camshaft (18) with a cam (22) being designed to interact with a first cam follower (17) and a second cam follower (20) in order to switch between two different operating modes
**characterized in that**
the cam followers (17, 20) are mounted on a pivotal rocker arm (13), the second cam follower (20) being hydraulically adjustable between two positions by means of a piston (21) located in a hydraulic cylinder (23), that the hydraulic cylinder (23) is connected to a hydraulic fluid source via a hydraulic fluid duct (29), and
that the piston (21) can be moved from one position to the other by the action of a quantity of hydraulic fluid delivered to the hydraulic cylinder.

2. The apparatus as claimed in claim 1,
**characterized in that,**
a control valve (26) and a non-return valve (31) are connected between the hydraulic fluid source and the hydraulic cylinder (23).

3. The apparatus as claimed in claim 2,
**characterized in that,**
the control valve (26) can be actuated by switching between two pressure levels in a hydraulic circuit (29) connected to the hydraulic fluid source.

4. The apparatus as claimed in any one of claims 1 to 3,
**characterized in that,**
the piston (21) is fitted in a double-acting piston cylinder (23).

5. The apparatus as claimed in claim 4,
**characterized in that,**
the control valve (26) in one control position connects the hydraulic fluid source (29) to one side of the piston (21) via the non-return valve (31), whilst the other side of the piston is connected to a drainage port (24; 25) for hydraulic fluid and vice versa, the non-return valve shutting of the flow towards the hydraulic fluid source (29).

## Patentansprüche

1. Vorrichtung für eine Verbrennungskraftmaschine, die für jeden Zylinder mit einem zugeordneten Kolben wenigstens ein Einlassventil und wenigstens ein Auslassventil (10) zur Steuerung der Verbindung zwischen der Verbrennungskammer in dem Zylinder und einem Einlasssystem bzw. einem Auslasssystem aufweist, wobei die Vorrichtung eine drehbare Nockenwelle (18) mit einer Nocke (22) aufweist, die für ein Zusammenwirken mit einem ersten Nockenfolger (17) und einem zweiten Nockenfolger (20) ausgelegt ist, um zwischen zwei unterschiedlichen Betriebsmodi
**dadurch gekennzeichnet, dass**
die Nockenfolger (17, 20) an einem schwenkbaren Kipphebel (13) angeordnet sind, wobei der zweite Nockenfolger (20) mittels eines in einem hydraulischen Zylinder (23) angeordneten Kolbens (21) hydraulisch zwischen zwei Positionen einstellbar ist, dass der hydraulische Zylinder (23) mit einer Hydraulikfluidquelle über eine Hydraulikfluidleitung (29) verbunden ist, und dass der Kolben (21) aus einer Position in die andere durch Wirkung einer Menge von Hydraulikfluid bewegt werden kann, die dem Hydraulikzylinder zugeführt wird.

2. Vorrichtung nach Anspruch 1, **dadurch gekennzeichnet, dass** ein Steuerventil (26) und ein Rückschlagventil (31) zwischen der Hydraulikfluidquelle und dem Hydraulikzylinder (23) geschaltet sind.

3. Vorrichtung nach Anspruch 2, **dadurch gekennzeichnet, dass** das Steuerventil (26) durch Umschalten zwischen zwei Druckhöhen in einem Hydraulikkreis (29) betätigt werden kann, der mit der Hydraulikfluidquelle verbunden ist.

4. Vorrichtung nach einem der Ansprüche 1 bis 3, **dadurch gekennzeichnet, dass** der Kolben (21) in einen Doppelwirkungskolbenzylinder (23) eingesetzt ist.

5. Vorrichtung nach Anspruch 4, **dadurch gekennzeichnet, dass** das Steuerventil (26) in einer Steuerposition die Hydraulikfluidquelle (29) mit einer Seite des Kolbens (21) über das Rückschlagventil (31) verbindet, während die andere Seite des Kolbens mit einem Ablasskanal (24; 25) verbunden ist und vice versa, wobei das Rückschlagventil die Strömung in Richtung der Hydraulikfluidquelle (29) absperrt.

## Revendications

1. Appareil pour moteur à combustion interne qui pour chaque cylindre ayant un piston associé a au moins une soupape d'admission et au moins une soupape d'échappement (10) pour commander la liaison entre la chambre de combustion du cylindre et un système d'admission et un système d'échappement respectivement, ledit appareil comprenant un arbre à cames rotatif (18) ayant une came (22) conçue pour interagir avec un premier suiveur de came (17) et un second suiveur de came (20) afin de commuter entre deux modes de fonctionnement différents
**caractérisé en ce que**
les suiveurs de came (17, 20) sont montés sur un culbuteur pivotant (13), le second suiveur de came (20) étant ajustable hydrauliquement entre deux positions par l'intermédiaire d'un piston (21) situé dans un vérin hydraulique (23),
**en ce que** le vérin hydraulique (23) est relié à une source de fluide hydraulique via une conduite de fluide hydraulique (29), et **en ce que** le piston (21) peut être déplacé à partir d'une position vers l'autre par l'action d'une quantité de fluide hydraulique délivrée au cylindre hydraulique.

2. Appareil selon la revendication 1,
**caractérisé en ce que**
une soupape de commande (26) et un clapet antiretour (31) sont reliés entre la source de fluide hydraulique et le cylindre hydraulique (23).

3. Appareil selon la revendication 2,
**caractérisé en ce que**
la soupape de commande (26) peut être actionnée par commutation entre deux niveaux de pression dans un circuit hydraulique (29) relié à la source de fluide hydraulique.

4. Appareil selon l'une quelconque des revendications 1 à 3,
**caractérisé en ce que**
le piston (21) est ajusté dans un cylindre de piston à double effet (23).

5. Appareil selon la revendication 4,
**caractérisé en ce que**
la soupape de commande (26) dans une position de commande relie la source de fluide hydraulique (29) à un côté du piston (21) via le clapet antiretour (31), alors que l'autre côté du piston est relié à l'orifice d'évacuation (24 ; 25) de fluide hydraulique et vice versa, le clapet antiretour fermant l'écoulement vers la source de fluide hydraulique (29).
